Europäisches Patentamt

European Patent Office

Office européen des brevets

(11) Veröffentlichungsnummer: **0 283 696 B1**

# (12) EUROPÄISCHE PATENTSCHRIFT

(45) Veröffentlichungstag der Patentschrift: **05.08.92**

(21) Anmeldenummer: **88101911.1**

(22) Anmeldetag: **10.02.88**

(51) Int. Cl.⁵: **F16J 15/10**, F17C 13/08,
H01R 13/52, H02K 5/22

(54) **Elastomerdichtung.**

(30) Priorität: **26.03.87 DE 8704509 U**

(43) Veröffentlichungstag der Anmeldung:
**28.09.88 Patentblatt 88/39**

(45) Bekanntmachung des Hinweises auf die
Patenterteilung:
**05.08.92 Patentblatt 92/32**

(84) Benannte Vertragsstaaten:
**CH DE FR GB IT LI NL SE**

(56) Entgegenhaltungen:
FR-A- 2 294 338
US-A- 4 584 433

(73) Patentinhaber: **Richard Hirschmann GmbH & Co.
Richard-Hirschmann-Strasse 19 Postfach 110
W-7300 Esslingen a.N.(DE)**

(72) Erfinder: **Freisleben, Walter
In den Messenwiesen 2
W-7333 Ebersbach 4(DE)**

(74) Vertreter: **Stadler, Heinz, Dipl.-Ing.
Richard-Hirschmann-Strasse 19 Postfach 110
W-7300 Esslingen a.N.(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

EP 0 283 696 B1

## Beschreibung

Die Neuerung betrifft eine Elastomerdichtung mit einer ebenen und einer zylindrischen Dichtungsfläche zur Abdichtung eines Übergangs zwischen einer ebenen und einer zylindrischen abzudichtenden Fläche.

Elastomerdichtungen der genannten Art sind dafür vorgesehen und werden dafür eingesetzt, Stecker oder sonstige Bauelemente, die eine ebene Aufsatzfläche aufweisen, auf Zylindergehäuse bespielweise von Manometern, Magnetventilen, Magnetspulen usw. mit abdichtender Wirkung für elektrische oder sonstige Durchführungen zu montieren. Derartige Montagevoraussetzungen sind in der Steuer- und Regelungstechnik, auf dem Gebiet der Hydraulik und auch auf sonstigen Gebieten häufig anzutreffen. Für jeden Zylinder-Durchmesser der zylinderförmigen Gehäuse, an denen ein Stecker oder ein sonstiges Bauelement dichtend befestigt werden muß, sind jeweils unterschiedliche Elastomerdichtungen erforderlich, deren Radiusfläche für die zylindrische Dichtungsfläche mit dem Zylinderradius übereinstimmen muß, für den die Elastomerdichtungen vorgesehen sind. Oder anders ausgedrückt, für jeden Zylinderdurchmesser ist eine eigene, individuelle Elastomerdichtung mit einem dem Gehäusedurchmesser entsprechenden Radius der zylindrischen Dichtungsfläche der Elastomerdichtung erforderlich. Der Fertigungsaufwand ist bei derartigen Elastomerdichtungen groß, da für jede Dichtung mit unterschiedlichem Radius für die zylindrische Dichtungsfläche ein Werkzeug hergestellt und verwendet werden muß. Die Herstellungskosten derartiger Elastomerdichtungen erhöhen sich auch dadurch, daß jeweils nur kleine Mengen einer bestimmten Elastomerdichtung gefertigt werden. Darüber hinaus muß eine große Anzahl von Elastomerdichtungen sowohl beim Hersteller als auch beim Kunden, der die Elastomerdichtungen verwendet, vorrätig gehalten werden, was die Lagerhaltung erheblich kompliziert und verteuert.

Der Erfindung liegt daher die Aufgabe zugrunde, eine Elastomerdichtung anzugeben, die nicht nur für einen bestimmten Durchmesser eines Gerätes, etwa eines Manometers, eines Magnetventils, einer Magnetspule usw. sondern für einen ganzen Bereich von Zylinderradien verwendet werden kann und dennoch eine sichere Abdichtung gewährleistet.

Diese Aufgabe wird erfindungsgemäß dadurch gelöst, daß das Basismaß der zylindrischen Dichtungsfläche kleiner als das Basismaß der ebenen Dichtungsfläche ist.

Herkömmliche Elastomerdichtungen weisen, vereinfacht ausgedrückt, im Querschnitt eine rechteckige Form auf, wobei eine der beiden großen Rechteckflächen eine Kreis- bzw. Zylinderfläche aufweist, deren Radius dem Radius des Zylinders entspricht, für den die Dichtung vorgesehen ist. Insbesondere erstrecken sich die kleinen Seitenflächen, die auf der ebenen Dichtfläche senkrecht stehen, bis zum Rand der zylindrischen Dichtungsfläche. Das bedeutet, daß am Rand der zylindrischen Dichtungsfläche eine relativ große und dicke Elastomermasse vorhanden ist. Bei eingehenden Untersuchungen im Zusammenhang mit der vorliegenden Neuerung hat der Erfinder diese Tatsache realisiert und festgestellt, daß die relativ große Masse von Elastomermaterial an der Seite der zylindrischen Dichtungsfläche dafür verantwortlich ist, daß die Verpressung der Elastomerdichtung gerade an den Stellen relativ schwierig und damit die Dichtfähigkeit jedenfalls dann gering ist, wenn der Radius der zylindrischen Dichtungsfläche nicht im wesentlichen identisch mit dem Zylinderradius des Zylinders ist, für den die Dichtung vorgesehen ist. Der Erfinder hat, ausgehend von dieser Überlegung, konsequent weitere Untersuchungen angestellt und dabei festgestellt, daß die Verpressung und Dichtung wesentlich besser ist, wenn die Elastomermasse an den Außenbereichen der zylindrischen Dichtungsfläche kleiner ist. Dies wird neuerungsgemäß dadurch erreicht, daß das Basismaß der zylindrischen Dichtungsfläche kleiner als das Basismaß der ebenen Dichtungsfläche gewählt ist. Überraschend hat sich dabei heraus gestellt, daß mit einer die neuerungsgemäßen Maßnahmen aufweisenden Elastomerdichtung auch eine sichere, zufriedenstellende Abdichtung möglich ist, wenn der Radius der zylindrischen Dichtungsfläche kleiner als der Zylinderradius des Gehäuses ist, für den die Elastomerdichtung vorgesehen ist. Oder anders ausgedrückt, ein und dieselbe Elastomerdichtung, die einen bestimmten Radius der zylindrischen Dichtungsfläche aufweist, kann für die Montage mit zylinderförmigen Vorrichtungen verwendet werden, bei denen der Zylinderradius nicht gleich dem Radius der zylindrischen Dichtungsfläche der Elastomerdichtung ist.

Es hat sich herausgestellt, daß es mit der erfindungsgemäßen Elastomerdichtung möglich ist, im Bereich des Verhältnisses zwischen dem Radius des abzudichtenden Gehäusezylinders und dem Radius der zylindrischen Dichtungsfläche der Elastomerdichtung von 1,2 bis 1,7 eine Dichtigkeit bei Gehäusezylindern zu erreichen, die in einem Durchmesserbereich von 30 bis 43 mm liegen. Bei einem diesbezüglichen Verhältniswert von 1,6 bis 2,5 ergibt sich eine Dichtigkeit mit Zylinderdurchmessern von 40 bis 62 mm, und im Verhältnisbereich von 2,4 bis 6,4 lassen sich Zylinder in einem Durchmesserbereich von 60 bis 160 mm sicher und zuverlässig abdichten.

Bei einer bevorzugten Ausführungsform der Erfindung ist das Verhältnis zwischen dem Basismaß der zylindrischen und der ebenen Dichtfläche 1,05 bis 1,4 vorzugsweise 1,1 bis 1,3 und insbesondere 1,2. Diese Verhältnisse der Basismaße ergeben eine besonders sichere Abdichtung bei einem relativ großen Durchmesserbereich des abzudichtenden Zylinders.

Besonders vorteilhaft ist es auch, wenn der Winkel $\alpha$, der zwischen der ebenen Dichtungsfläche und der Fläche besteht, die den Übergang zwischen den Basismaßen der zylindrischen und ebenen Dichtungsflächen darstellt, 20° bis 40°, vorzugsweise 25° bis 35° und insbesondere 30° beträgt. Bei Winkelmaßen gemäß dieser Ausführungsform ergibt sich eine besonders gute und zuverlässige Verpressung der Elastomerdichtung an den Außenbereichen insbesondere auch bei unterschiedlichen Durchmessern des abzudichtenden Zylinders.

Vorteilhaft ist es weiterhin, wenn wenigstens auf der zylindrischen Dichtungsfläche eine Dichtungslippe angeformt ist. Diese Dichtungslippe führt zu einer zusätzlichen Sicherheit bei der Abdichtung. Die Dichtungslippe sollte dabei vorzugsweise am Rand der zylindrischen Dichtungsfläche oder geringfügig von Rand nach innen beabstandet angeformt sein. Insbesondere dann, wenn der Radius der zylindrischen Dichtungsfläche kleiner als der Radius des zu dichten Zylinders ist, ist der Druck am Rand der Elastomerdichtung groß und damit die Dichtwirkung der zusätzlichen Dichtungslippe am Rand besser als wenn sie weiter vom Rand nach innen beabstandet ist.

Die erfindunsgsgemäße Elastomerdichtung ist besonders zur dichtenden Anbringung von Steckverbindern für elektrische Anschlüsse oder von sonstigen Durchführungen an Geräte, Maschinen und Anlagen geeignet, wenn die Teile, an denen derartige Steckverbinder angebracht werden sollen, keine ebene Fläche aufweisen. Einsetzbar sind derartige Elastomerdichtungen insbesondere im Zusammenhang mit hydraulischen, pneumatischen und elektromagnetischen Geräten, z.B. bei Magnetventilen, Druckgebern, Grenztastern, Näherungsschaltern, Strömungsrichtern, Niveaugebern usw. Anwendungsbereiche ergeben sich auch für "metallfreie" Gehäuse, z.B. in der chemischen Industrie.

Die Erfindung wird nachstehend anhand der Zeichnungen beispielsweise näher erläutert. Es zeigen:

Figur 1    eine Ausführungsform der Erfindung in Aufsicht,

Figur 2    eine Querschnittsdarstellung entlang der in Fig. 1 eingezeichneten Schnittlinie II-II,

Figur 3    eine perspektivische Darstellung der in den Figuren 1 und 2 gezeigten Ausführungsform,

Figur 4    die in den Figuren 1 bis 3 dargestellte Ausfürhungsform mit einem auf der ebenen Dichtungsfläche angeordneten Steckverbinder,

Figur 5    in schematischer Darstellung eine erfindungsgemäße Elastomerdichtung, die einen Radius für die zylindrische Dichtungsfläche aufweist, welcher gleich dem Zylinderradius des ebenfalls schematisch dargestellten Zylindergehäuses ist,

Figur 6    die in Figur 5 dargestellte Anordnung in verpreßtem Zustand und

Figur 7    den Figuren 5 und 6 entsprechende Darstellungen, bei denen der Radius der zylindrischen Dichtungsfläche der Elastomerdichtung kleiner als der Radius des abzudichtenden Zylinders ist.

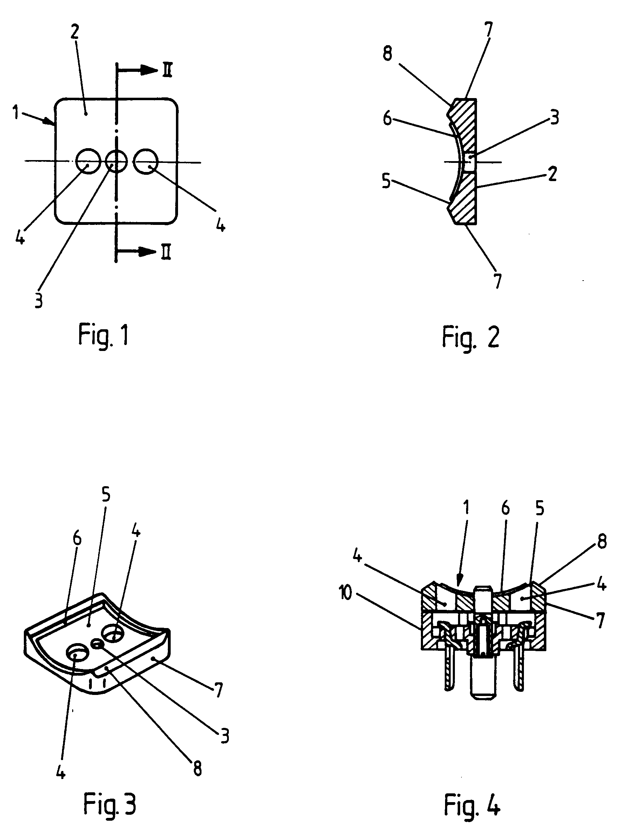

Die in den Figuren 1 bis 3 dargestellte Ausführungsform der Dichtung 1 ist beispielsweise aus Nitril-Butadien-Kautschuk oder aus Silicon-Kautschuk hergstellt und weist eine ebene Dichtungsfläche 2 auf, die in dem dargestellten Ausführungsbeispiel rechteckförmig mit abgerundeten Kanten ist. Ein Mittelloch 3 dient der Schraubbefestigung und die Löcher 4 sind für Anschlußstift- und Leitungsdurchgänge vorgesehen.

Die in Fig. 2 dargestellte Schnittzeichnung zeigt die ebene Dichtfläche 2 auf der Unterseite und eine zylindrische Dichtfläche 5 auf der Oberseite mit einer Dichtungslippe 6, die nahe dem Außenrand der zylindrischen Dichtungsfläche verläuft, wie aus der perspektivischen Darstellung Fig. 3 deutlicher hervorgeht. Auch in den Fig. 2 und 3 sind die Durchgangslöcher 4 für einen Anschlußstift und max. drei Leitungen ersichtlich. Die Seitenflächen 7 der Elastomerdichtungen stehen senkrecht auf der ebenen Dichtungsfläche.

Im Gegensatz zu den herkömmlichen Elastomerdichtungen, bei denen die Seitenflächen wesentlich breiter sind und sich im wesentlichen mit der Fortsetzung der Zylinderfläche schneiden, ist, wei insbesondere aus Fig. 2 ersichtlich ist, das Basismaß der zylindrischen Dichtungsfläche 5 kleiner als das Basismaß der ebenen Dichtungsfläche 2 (und zwar aufgrund der abgeschrägten Fläche 8, die den Übergang zwischen den Basismaßen der zylindrischen und ebenen Dichtungsflächen darstellt). Auf diese Weise befindet sich bei der neuerungsgemäßen Elastomerdichtung weniger Masse insbesondere an den äußeren Bereichen, wodurch die Verformbarkeit verbessert und die Elastomerdichtung auch für unterschiedliche abzudichtende Zylinderflächen geeignet ist.

In Fig. 4 ist ein Beispiel dargestellt, wie ein Gerätesteckverbinder 10 unter Verwendung der erfindungsgemäßen Elastomerdichtung angebracht ist. Bei dieser Ausführungsform handelt es sich jedoch um einen Stecker mit vier Anschlußkontakten. Der mittlere Anschlußkontakt ragt dabei durch die Elastomerdichtung hindurch ins Innere des abzudichtenden und mit einem Steckverbinder zu versehenden, ein zylindrisches Gehäuse aufweisenden Geräts, beispielsweise eines Magnetventils oder eines Druckgebers.

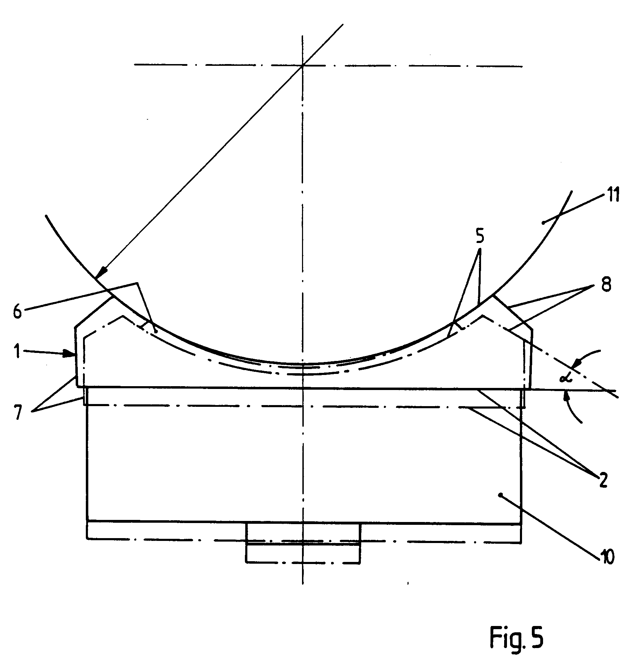

Anhand der Fig. 5 bis 7 soll die Wirkungsweise der erfindungsgemäßen Elastomerdichtung nochmals eingehand erläutert werden.

Wie Fig. 5 zeigt, befindet sich zwischen einem anzubringenden Steckverbinder 10 und den zylindrischen Gehäuse 11 die erfindungsgemäße Elastomerdichtung 1. Die Lage des Steckverbinders 10 und die Form der Elastomerdichtung 1 ist im nichtverpreßten Zustand durch gestrichelte und im verpreßten Zustand durch ausgezogene Linie wiedergegeben.

Wie aus Fig. 1 ersichtlich ist, stimmt der Radius des Zylindergehäuses 11 mit der noch nicht verpreßten Elastomerdichtung 1 im wesentlichen überein, so daß die Dichtungslippe 6 im nichtverpreßten Zustand im weentlichen gleichmäßig auf dem Zylindergehäuse 11 aufliegt. Wie durch die ausgezogene Linierung ersichtlich, wird bei einer Verpressung, etwa bei Aufschrauben des Steckverbinders 10 auf das Zylindergehäuse 11, die Dichtungslippe 6 vollständig verpreßt und die Dichtung in der dargestellten Weise verformt

Der Winkel $\alpha$ zwischen einer Ebene, die der ebenen Dichtungsfläche 2 parallel liegt, und der Fläche, die den Übergang zwischen den Basismaßen der zylindrischen und ebenen Dichtungsflächen 5 bzw. 2 darstellt, beträgt bei dem in Fig. 5 gezeigten Ausführungsbeispiel 30°. Dieser Winkelwert hat sich im Zusammenhang mit ausführlichen Untersuchungen als vorteilhaft erwiesen.

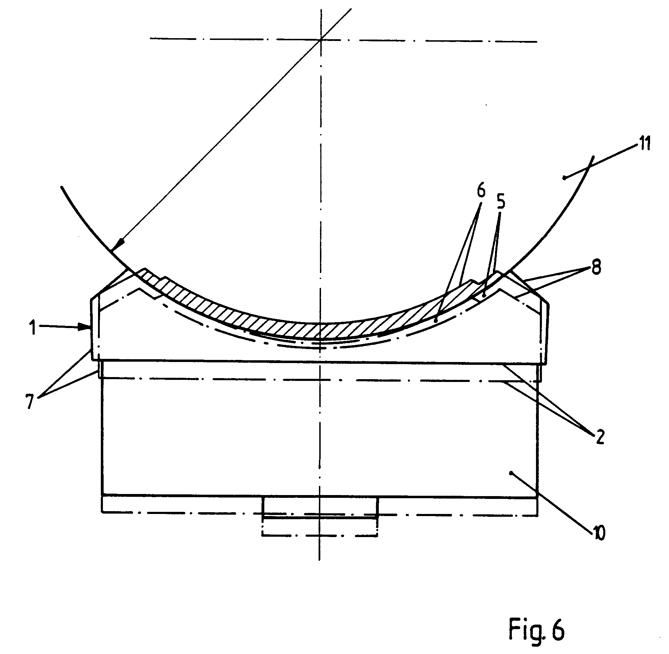

Fig. 6 entspricht Fig. 5, wobei in Fig. 6 jedoch die Lage der Elastomerdichtung 1 in verpreßtem Zustand zusätzlich so dargestellt ist, als ob die Elastomerdichtung 1 dabei ihre Form nicht geändert hätte. Daraus ergibt sich die schraffierte Fläche, die das Volumen der Elastomerdichtung wiedergibt, die beim Verpressen auf dem Zylindergehäuse 11 "verdrängt" wurde.

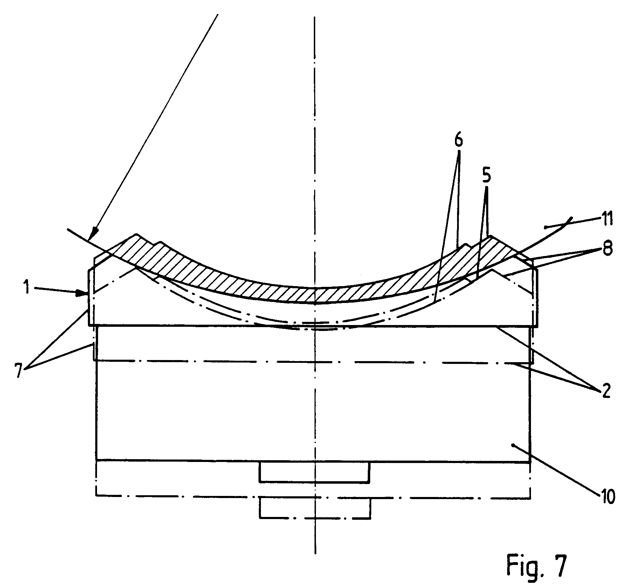

Fig. 7 zeigt eine erfindungsgemäße Elastomerdichtung 1 im Zusammenhang mit einem Zylindergehäuse, 11, dessen Zylinderradius jedoch größer als der Radius der zylindrischen Dichtungsfläche 5 der neuerungsgemäßen Elastomerdichtung ist ist.

Auch in Fig. 7 sind wiederum die den Fig. 1 bis 5 entsprechenden Teile und Elemente mit denselben Bezugszeichen versehen.

In Fig. 7 ist die Lage des Steckverbinders 10 und der Elastomerdichtung 1 im nicht verpreßten Zustand wiederum strichpunktliniert dargestellt. Dabei ist deutlich ersichtlich, daß der Radius der zylindrischen Dichtungsfläche 5 der Elastomerdichtung 1 in diesem Falle deutlich kleiner als der Radius des Zylindergehäuses 11 ist.

Die Lage des Streckverbinders 10 und der Elastomerdichtung 1 in verpreßtem Zustand ist in Fig. 7 wiederum durch dicke Linien dargestellt.

Entsprechend Fig. 6 ist die Lage der Elastomerdichtung 1 im verpreßten Zustand mit durchgehenden, dünnen Linien so eingezeichnet, als ob beim Verpressungsvorgang die Elastomermasse nicht verdrängt worden wäre. Dabei ergibt sich wiederum die schraffierte Fläche, die dem Volumen entspricht, das beim Verpressen der Elastomerdichtung 1 "verdrängt" wurde.

Insbesondere aus Fig. 7 wird das Prinzip der Neuerung deutlich. Aufgrund der erfindungsgemäßen Maßnahme, das Basismaß der zylindrischen Dichtungsfläche kleiner als das Basismaß der ebenen Dichtungsfläche auszubilden, bleibt im mittleren Teil noch ausreichender Verpressungsdruck vorhanden, um auch im mittleren Teil eine gute Verpressung und Abdichtung der Elastomerdichtung 1 auf dem Zylindergehäuse 11 sicherzustellen. Die Tatsache, daß eine gute Verpressung und Abdichtung auch im Mittelteil der Elastomerdichtung 1 vorhanden ist, ist in Fig. 7 aus dem relativ dicken schraffierten Abstand auch im Mittelteil der Elastomerdichtung 1 ersichtlich, da die Dicke der schraffierten Fläche ein Maß für den Anpreßdruck und damit für die Dichtigkeit über die gesamte Dichtungsfläche hinweg ist. Die Dicke der schraffierten Fläche zum Rande hin und damit entsprechend der Anpreßdruck ist - wie durch die Darstellung der schraffierten Fläche deutlich wird - zwar etwas großer als in der Mitte, jedoch noch nicht so unterschiedlich zur Mitte, daß in der Mitte die Dichtfunktion in Frage gestellt wäre. Dies ist bei den herkömmlichen Elastomerdichtungen anders, da aufgrund der großen Masse am Rand der Dichtung der gesamte Druck im wesentlichen nur am Rand auftreten kann und in der Mitte der Elastomerdichtung der Druck und damit die Dichtwirkung gering ist.

**Patentansprüche**

1. Elastomerdichtung mit einer ebenen und einer zylindrischen Dichtungsfläche zur Abdichtung eines Übergangs zwischen einer ebenen und einer zylindrischen abzudichtenden Fläche, dadurch gekennzeichnet, daß das Basismaß der zylindrischen Dichtungsfläche (5) kleiner als das Basismaß der ebenen Dichtungsfläche (2) ist.

2. Elastomerdichtung nach Anspruch 1, dadurch gekennzeichnet, daß das Verhältnis zwischen den Basismaßen der zylindrischen (5) und der ebenen Dichtungsfläche (2) 1,05 bis 1,4, vorzugsweise 1,1 bis 1,3 und insbesondere 1,2 ist.

3. Elastomerdichtung nach Anspruch 1 oder 2, dadurch gekennzeichnet, daß der Winkel (α), der zwischen der ebenen Dichtungsfläche (2) und der Fläche (8) eingeschlossen ist, die den Übergang zwischen den Basismaßen der zylindrischen (5) und der ebenen Dichtungsfläche (2) darstellt, 20° bis 40°, vorzugsweise 25° bis 35° und insbesondere 30° beträgt.

4. Elastomerdichtung nach einem der Ansprüche 1 bis 3, dadurch gekennzeichnet, daß wenigstens auf der zylindrischen Dichtungsfläche (5) eine Dichtungslippe (6) ausgeformt ist.

5. Elastomerdichtung nach Anspruch 4, dadurch gekennzeichnet, daß die Dichtungslippe (6) am Rand der zylindrischen Dichtungsfläche (5) oder geringfügig vom Rand nach innen beabstandet angeformt ist.

## Claims

1. Elastomeric joint with one flat and one cylindrical sealing surface for sealing an area of transition between a flat and a cylindrical surface to be sealed,
   **in such a way characterized,** that the basic measure of the cylindrical sealing surface (5) is smaller than the basic measure of the flat sealing surface (2).

2. Elastomeric joint according to claim 1,
   **in such a way characterized,** that the relationship between the basic measures of the cylindrical sealing surface (5) and the flat sealing surface (2) is in the range of 1,05 to 1,4 and preferably 1,1 to 1,3 and even more specifically, 1,2.

3. Elastomeric joint according to claims 1 or 2,
   **in such a way characterized,** that the angle (α) which is enclosed between the flat sealing surface (2) and the surface (8) which represents the transition between the basic measures of the cylindrical sealing surface (5) and the flat sealing surface (2) is in the range of 20° to 40° and preferably 25° to 35° and even more specifically, 30°.

4. Elastomeric joint according to one of the claims 1 through 3,
   **in such a way characterized,** that at least on the cylindrical sealing surface (5) a sealing lip (6) is shaped.

5. Elastomeric joint according to claim 4,
   **in such a way characterized,** that the sealing lip (6) is shaped at the very edge of the cylindrical sealing surface (5) or at a marginal distance from the edge to the inner area.

## Revendications

1. Joint à élastomère avec une surface de contact plain et une surface de contact cylindrique pour boucher une jonction entre une surface plat et une surface cylindrique à étancher,
   **caractérisé par le fait** que la mesure de base de la surface de contact cylindrique (5) est plus petit que la mesure de base de la surface de contact plat (2).

2. Joint à élastomère comme en demande 1.,
   **caractérisé par le fait** que la relation entre les mesures de base de la surface de contact cylindrique (5) et la surface de contact plat (2) est dans la gamme de 1,05 à 1,4 et préférablement 1,1 à 1,3 et plus particulierement 1,2.

3. Joint à élastomère comme en demande 1. ou 2.,
   **caractérisé par le fait** que le angle (α) qui existe entre la surface de contact plat (2) et la surface (8) qui constitue la jonction entre les mesures de base de la surface de contact cylindrique (5) et la surface de contact plat (2) est dans la gamme de 20° à 40° et préférablement 25° à 35° et plus particulierement 30°.

4. Joint à élastomère comme en une des demandes 1. à 3.,
   **caractérisé par le fait** que au moins sur la surface de contact cylindrique (5) est formeé une lèvre d'étanchéité (6).

5. Joint à élastomère comme en demande 4.,
   **caractérisé par le fait** que la lèvre d'étanchéité (6) est formeé à l'extrémité de la surface de contact cylindrique (5) ou à une distance marginale vers l'intérieur de là.

Fig. 1

Fig. 2

Fig. 3

Fig. 4

Fig. 5

Fig. 6

Fig. 7